(19) Europäisches Patentamt
European Patent Office
Office européen des brevets

(11) EP 4 314 945 B1

(12) EUROPEAN PATENT SPECIFICATION

(45) Date of publication and mention of the grant of the patent:
**17.12.2025 Bulletin 2025/51**

(21) Application number: **22710175.5**

(22) Date of filing: **08.03.2022**

(51) International Patent Classification (IPC):
***G02F 1/15*** (2019.01) ***G02F 1/1503*** (2019.01)
***G02F 1/1516*** (2019.01) ***G02F 1/1524*** (2019.01)

(52) Cooperative Patent Classification (CPC):
**G02F 1/15165; G02F 1/15245; G02F 1/1525;**
G02F 1/1503

(86) International application number:
**PCT/IB2022/052020**

(87) International publication number:
**WO 2022/208189 (06.10.2022 Gazette 2022/40)**

# (54) ELECTROCHROMIC ELEMENT, ELECTROCHROMIC DISPLAY DEVICE, ELECTROCHROMIC LIGHT-CONTROLLING DEVICE, AND ELECTROLYTE COMPOSITION

ELEKTROCHROMES ELEMENT, ELEKTROCHROME ANZEIGEVORRICHTUNG, ELEKTROCHROME LICHTSTEUERUNGSVORRICHTUNG UND ELEKTROLYTZUSAMMENSETZUNG

ÉLÉMENT ÉLECTROCHROMIQUE, DISPOSITIF D'AFFICHAGE ÉLECTROCHROMIQUE, DISPOSITIF DE COMMANDE DE LUMIÈRE ÉLECTROCHROMIQUE ET COMPOSITION D'ÉLECTROLYTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2021 JP 2021060656**

(43) Date of publication of application:
**07.02.2024 Bulletin 2024/06**

(73) Proprietor: **Ricoh Company, Ltd.**
**Tokyo 143-8555 (JP)**

(72) Inventors:
- **KANEKO, Fuminari**
**Tokyo 143-8555 (JP)**
- **MATSUOKA, Yuto**
**Tokyo 143-8555 (JP)**
- **URA, Naoki**
**Tokyo 143-8555 (JP)**
- **INOUE, Mamiko**
**Tokyo 143-8555 (JP)**
- **OHYA, Kayato**
**Tokyo 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 2 386 901 US-A1- 2021 032 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 314 945 B1

## Description

[Technical Field]

The present disclosure relates to an electrochromic element, an electrochromic display device, an electrochromic light-controlling device, and an electrolyte composition.

[Background Art]

In a high-load environment such as driving repeated many times, long-term continuous driving, or driving at high temperatures, existing electrochromic elements cause a phenomenon where a color developed once remains not to return to a transparent state. This phenomenon is believed to result from imbalance in charges between a pair of electrodes; i.e., due to charges remaining at either one of the electrodes. This phenomenon is called "incomplete decoloring (or "color remaining")". Such an incomplete decoloring phenomenon raises a problem of being unable to provide an electrochromic element having a sufficiently long lifetime.

A measure to solve the incomplete decoloring phenomenon is a method of applying excessively high decoloring voltage to remove the remaining charges. The application of high voltage, however, allows substances in the element to cause an unexpected reaction, leading to degradation of the electrochromic element to result in a shortened lifetime. A proposed measure to prevent such degradation to solve the incomplete decoloring phenomenon is, for example, a method of disposing a third electrode in addition to the pair of electrodes and moving the remaining charges away to the third electrode (see, for example, PTL 1).

Another proposal is a technique to use a material that is more easily reacted than an electrochromic material and is free from color change by reaction (see, for example, PTL 2). This is called "redox buffer". Even if charges remain, "redox buffer" rather than the electrochromic material holds the charges to enable an electrochromic element to be maintained in a decolored state.

[Citation List]

[Patent Literature]

[PTL 1] Japanese Patent No. 6597373
[PTL 2] U.S. Patent No. 6188505 US 2021/0032531 A1 and EP2386901 A1 both disclose electrochromic display elements and electrochromic compounds useful to undertand the invention.

[Summary of Invention]

[Technical Problem]

The present disclosure has an object to provide an electrochromic element that can prevent occurrence of the incomplete decoloring phenomenon.

[Solution to Problem]

The invention is directed to an electrochromic element as recited in appended independent claim 1, to the use of an electrochromic element as recited in appended independent claim 8, to an electrochromic display device as recited in appended claim 9 and to an electrochromic light-controlling device as recited in appended independent claim 10. Other aspects of the invention are recited in the appended dependent claims.

[Advantageous Effects of Invention]

The present disclosure can provide an electrochromic element that can prevent occurrence of the incomplete decoloring phenomenon.

[Brief Description of Drawings]

The accompanying drawings are intended to depict example embodiments of the present invention and should

not be interpreted to limit the scope thereof. The accompanying drawings are not to be considered as drawn to scale unless explicitly noted. Also, identical or similar reference numerals designate identical or similar components throughout the several views.

[FIG. 1] FIG. 1 is a schematic cross-sectional view of an electrochromic element according to a first embodiment.
[FIG. 2] FIG. 2 is a schematic cross-sectional view of an electrochromic element according to a second embodiment.

[Description of Embodiments]

The terminology used herein is for the purpose of describing particular embodiments only and is not intended to be limiting of the present invention.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

(Electrochromic element)

An electrochromic element of the present disclosure includes: a first electrode; an electrochromic layer on the first electrode; a second electrode; and an electrolyte layer between the electrochromic layer and the second electrode. The electrolyte layer includes a basic compound. If necessary, the electrochromic element further includes other members.

The related art described in PTL 1 (Japanese Patent No. 6597373), which disposes a third electrode, imposes limitations to the thickness and shape of the electrochromic element. There is a problem of being unable to provide an electrochromic element that is suitable for expected applications of the electrochromic element.

The related art described in PTL 2 (U.S. Patent No. 6188505) involves reaction of "redox buffer" in normal coloring driving as well. As a result, necessary current for coloring increases to increase electric power consumed. When a color is developed again in a state where part of the "redox buffer" has been already reacted, an expected colored state cannot be kept since the proportions of charges input to the "redox buffer" and the electrochromic material are different from the initial state.

In the present disclosure, by including: a first electrode; an electrochromic layer on the first electrode; a second electrode; and an electrolyte layer between the electrochromic layer and the second electrode, where the electrolyte layer includes a basic compound, it is possible to prevent imbalance in charges to prevent occurrence of the incomplete decoloring phenomenon and as a result provide an electrochromic element having a long lifetime.

An electrolyte composition of the present disclosure, which is used in the electrochromic element of the present disclosure, will next be described in detail.

(Electrolyte composition)

The electrolyte composition of the present disclosure includes an electrolyte and a basic compound, and if necessary, further includes other components.

<Electrolyte>

Examples of the electrolyte include, but are not limited to, inorganic ion salts such as alkali metal salts and alkaline earth metal salts, quaternary ammonium salts, supporting salts of, for example, acids and alkalis.

Examples of the electrolyte include, but are not limited to, $LiClO_4$, $LiBF_4$, $LiAsF_6$, $LiPF_6$, $LiCF_3SO_3$, $LiCF_3COO$, KCl, $NaClO_3$, NaCl, $NaBF_4$, NaSCN, $KBF_4$, $Mg(ClO_4)_2$, and $Mg(BF_4)_2$. These may be used alone or in combination.

The electrolyte used may be ionic liquid.

The ionic liquid is not particularly limited and may be any substance that is typically studied or reported. In particular, organic ionic liquid has a molecular structure that assumes liquid in a wide range of temperature including room temperature.

Examples of a cation component in the molecular structure of the ionic liquid include, but are not limited to: imidazole derivatives such as N,N-dimethylimidazole salts, N,N-methylethylimidazole salts, and N,N-methylpropylimidazole salts; aromatic salts such as N,N-dimethylpyridinium salts and N,N-methylpropylpyridinium salts; and aliphatic quaternary ammonium compounds of, for example, tetraalkylammonium, such as trimethylpropylammonium salts, trimethylhexylammonium salts, and triethylhexylammonium salts

An anion component in the molecular structure of the ionic liquid is preferably a compound containing fluorine in terms of stability in the atmosphere. Examples of the anion component include, but are not limited to, $BF_4^-$, $CF_3SO_3^-$, $PF_4^-$, $(CF_3SO_2)_2N^-$, $TCB^-$, $FSI^-$, $TFSI^-$, $TCHB^-$, and $TCFB^-$. The ionic liquid used can be prepared by combining these cation components and anion components.

Examples of the ionic liquid include, but are not limited to, ethylmethylimidazolium tetracyanoborate, ethylmethylimidazolium bistrifluoromethanesulfonimide, ethylmethylimidazolium tripentafluoroethyltrifluorophosphate, ethylmethylimidazolium bis(fluorosulfonyl)imide, ethylmethylimidazolium diethylphosphate, butylmethylimidazolium hexafluorophosphate, ethylmethylimidazolium trifluoromethanesulfonate, ethylmethylimidazolium acetate, ethylmethylimidazolium tricyanomethanide, ethylmethylimidazolium dicyanamide, methyloctylimidazolium hexafluorophosphate, methylpropylpyrrolidinium bisfluorosulfonimide, butylmethylimidazolium tetrafluoroborate, butylmethylimidazolium bis(trifluoromethanesulfonyl)imide, hexylmethylimidazolium bis(trifluoromethylsulfonyl)imide, and allylbutylimidazolium tetrafluoroborate. These may be used alone or in combination.

<Basic compound>

Examples of the basic compound include, but are not limited to, amines, amides, and heterocyclic compounds that contain a nitrogen atom, basic organic phosphorus compounds, and conjugated salts of organic acids.

Specific examples of the basic compound include, but are not limited to, ethylamine, diethylamine, triethylamine, ethyldiisopropylamine, 1,4-diazabicyclo[2.2.2]octane, ethanolamine, diethanolamine, triethanolamine, aniline, 1,8-bis(dimethylamino)naphthalene, pyrrolidine, pyrrole, N-methylpyrrolidone, 1-methyl-2-pyrrolidone, N-methylacetamide, N-methylformamide, pyridine, imidazole, pyrimidine, pyrazine, indole, diazabicycloundecene, 1,10-phenanthroline, triphenylphosphine, triethylphosphine, sodium acetate, sodium citrate, tetramethylammonium acetate, betaine, 2-(dimethylamino)ethyl acrylate, N-[3-(dimethylamino)propyl]acrylamide, N,N-dimethylacrylamide, 3-[(3-acrylamidopropyl) dimethylammonio]propanoate, 4-acryloylmorpholine, and 2-(dimethylamino) methacrylate. These may be used alone or in combination. Of these, a compound having a pyridine group in a structure thereof is preferable.

Examples of the compound having a pyridine group include, but are not limited to, pyridine, 4-dimethylaminopyridine, 2,6-lutidine, bipyridine, fluoropyridine, 4-tert-butylpyridine, 2,6-di-tert-butylpyridine, 5-ethyl-2-pyridineethanol, ethyl 4-pyridylacetate, ethyl 3-pyridylacetate, ethyl 2-pyridylacetate, 4-benzylpyridine, 3-benzylpyridine, 2-benzylpyridine, 4-(3-phenylpropyl)pyridine, and ethyl 4-pyridylacetate. These may be used alone or in combination.

The basic compound is preferably a basic polymer since the basic polymer does not easily deteriorate by virtue of suppressed diffusion to the electrode surface and the basic compound itself reacts to a less extent.

The weight average molecular weight of the basic polymer is preferably from 10,000 through 1,000,000 and more preferably from 10,000 through 200,000.

When the weight average molecular weight is lower than 10,000, the basic polymer may be diffused in the electrolyte composition to cause unexpected reaction on the electrode surface, leading to deterioration. When the weight average molecular weight is higher than 1,000,000, solubility thereof may become insufficient.

The weight average molecular weight can be measured through, for example, gel permeation chromatography (GPC).

Examples of the basic polymer include, but are not limited to, polyvinylpyridines such as poly(4-vinylpyridine) and poly(2-vinylpyridine), poly(4-vinylpyridine-co-styrene), poly(2-vinylpyridine-co-styrene), poly(4-vinylpyridine-co-butyl methacrylate), polyacrylamide, poly(dimethylaminoethyl methacrylate), and polyamine. Of these, polyvinylpyridines are preferable because they do not adversely affect polymerization reactivity at the time of polymer polymerization, and sufficient solubility in the electrolyte composition is obtained.

As a method of mixing the basic polymer in the electrolyte composition, the basic polymer may be directly mixed therein, or may be incorporated as a copolymerization unit in a polymer chain for retaining the electrolyte and a solvent.

A method of incorporating it in the polymer chain as a copolymerization unit is polymerizing basic monomers to synthesize the basic polymer. Examples of the basic monomers include, but are not limited to, 2-vinylpyridine, 4-vinylpyridine, dimethylaminopropylacrylamide, 2-(dimethylamino)ethyl acrylate, and 3-[(3-acrylamidopropyl)dimethylammonio]propanoate.

The amount of the basic compound is not particularly limited and may be appropriately selected depending on the intended purpose. It is preferably 0.01% by mass or more but 10% by mass or less and more preferably 0.01% by mass or more but 2% by mass or less relative to the total amount of the electrolyte composition.

-Electrolyte solvent-

Examples of electrolyte solvents include, but are not limited to, propylene carbonate, acetonitrile, γ-butyrolactone, ethylene carbonate, sulfolane, dioxolane, tetrahydrofuran, 2-methyltetrahydrofuran, dimethylsulfoxide, 1,2-dimethoxyethane, 1,2-ethoxymethoxyethane, polyethylene glycol, alcohols, and mixed solvents thereof.

When using the ionic liquid as the electrolyte, the ionic liquid also serves as the electrolyte solvent. This is why the electrolyte solvent is not necessarily needed.

It is not necessary for the electrolyte composition to be a low-viscous liquid, and the electrolyte composition can have various forms such as a gel form, a polymer-crosslinked form, and a liquid crystal-dispersed form. Of these, the electrolyte composition is preferably a solid or a gel in terms of easy handling and prevention of liquid leakage, which may occur if it is a liquid. When the electrolyte composition is formed into a gel or a solid, the resultant element can have advantages such as increases in strength and reliability.

A preferable method of forming the electrolyte composition into a solid is retaining the electrolyte, the basic compound, and the electrolyte solvent in a binder resin. This is because high ion conductivity and solid strength can be obtained.

The binder resin is not particularly limited and may be appropriately selected depending on the intended purpose. Examples of the binder resin include, but are not limited to, acrylic resins, polyester resins, urethane resins, polyether resins, polyamide resins, polysaccharide-based resins such as cellulose derivatives, polyacrylamide-based resins, polyvinyl ester-based resins, and resins obtained by polymerizing photopolymerizable monomers and photopolymerizable oligomers. Basic polymer resins can also serve as the basic compound in the present disclosure. These may be used alone or in combination. Of these, resins obtained by polymerizing photopolymerizable monomers and photopolymerizable oligomers are particularly preferable because production is possible at a lower temperature and in a shorter time than in a method of forming a thin film by thermal polymerization or evaporation of a solvent.

As the photopolymerizable monomers, monofunctional photopolymerizable monomers, and multifunctional photopolymerizable monomers such as difunctional photopolymerizable monomers and trifunctional or higher photopolymerizable monomers are used.

Examples of the monofunctional photopolymerizable monomers include, but are not limited to, 2-(2-ethoxyethoxy)ethyl acrylate, methoxypolyethylene glycol monoacrylate, methoxypolyethylene glycol monomethacrylate, methyl methacrylate, phenoxypolyethylene glycol acrylate, 2-acryloyloxyethyl succinate, acryloylmorpholine, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxytriethylene glycol acrylate, phenoxytetraethylene glycol acrylate, cetyl acrylate, isostearyl acrylate, stearyl acrylate, and styrene monomers. These may be used alone or in combination.

Examples of the difunctional photopolymerizable monomers include, but are not limited to, 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, and neopentyl glycol diacrylate. These may be used alone or in combination. In the above listing, "EO-modified" means ethylene oxy-modified, and "PO-modified" means propylene oxy-modified.

Examples of the trifunctional or higher photopolymerizable monomers include, but are not limited to, trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl)isocyanurate, dipentaerythritol hexaacrylate (DPHA), caprolactone-modified dipentaerythritol hexaacrylate, dipentaerythritol hydroxypenta acrylate, alkyl-modified dipentaerythritol pentaacrylate, alkyl-modified dipentaerythritol tetraacrylate, alkyl-modified dipentaerythritol triacrylate, dimethylolpropane tetraacrylate (DTMPTA), pentaerythritol ethoxytetraacrylate, EO-modified phosphoric acid triacrylate, and 2,2,5,5-tetrahydroxymethylcyclopentanone tetraacrylate. These may be used alone or in combination.

Examples of the photopolymerizable oligomers include, but are not limited to, urethane acrylates, epoxy acrylates, acrylic acrylates, polyester acrylates, polyethylene glycol acrylates, methyl methacrylates, ethyl methacrylates, butyl methacrylates, and various reactive polymers.

-Other components-

The other components are not particularly limited and may be appropriately selected depending on the intended purpose. Examples of the other components include, but are not limited to, polymerization initiators.

The polymerization initiators are not particularly limited and may be appropriately selected depending on the intended purpose. Examples of the polymerization initiators include, but are not limited to, radical polymerization initiators.

Examples of the radical polymerization initiators include, but are not limited to, thermal polymerization initiators and photopolymerization initiators.

Examples of the thermal polymerization initiators include, but are not limited to: azo compounds such as 2,2'-azobisisobutyronitrile, dimethyl-2,2'-azobisisobutylate, 2,2'-azobis(2,4-dimethylvaleronitrile), and 2,2'-azobis[2-(2-imidazolin-2-yl)propane]; and organic peroxides such as 2,5-dimethyl-2,5-bis(tert-butylperoxy)hexane and di(4-tert-butylcyclohexyl)peroxydicarbonate. These may be used alone or in combination.

Examples of the photopolymerization initiators include, but are not limited to: ketal-based photopolymerization initiators such as 2,2-dimethoxy-1,2-diphenylethan-1-one; acetophenone-based photopolymerization initiators such as 1-hydroxycyclohexylphenylketone, 2,2-diethoxyacetophenone, 2,2-dimethoxy-2-phenylacetophenone, 4-phenoxydichloroacetophenone, and 4-(t-butyl)dichloroacetophenone; and benzoin ether-based photopolymerizaion initiators such as benzoin methyl ether, benzoin ethyl ether, benzoin propyl ether, benzoin isopropyl ether, and benzoin isobutyl ether. These may be used alone or in combination.

The amount of the polymerization initiator is not particularly limited and may be appropriately selected depending on the intended purpose. The amount of the polymerization initiator is preferably 0.001 parts by mass or more but 5 parts by mass or less, more preferably 0.01 parts by mass or more but 2 parts by mass or less, and particularly preferably 0.01 parts by mass or more but 1 part by mass or less, relative to 100 parts by mass of all the monomer components.

One exemplary method usable for forming the electrolyte layer is injecting the electrolyte composition, which is prepared as a liquid, into the gap between the electrochromic layer and an electrochemically active layer, and solidifying the electrolyte composition through curing with light. Another exemplary method usable for forming the electrolyte layer is solidifying the electrolyte as a sheet in advance, and then attaching the sheet to other layers.

When a liquid electrolyte composition is used as the electrolyte composition, for example, the electrolyte composition, which is prepared as a liquid, is injected into the gap between the electrochromic layer and an electrochemically active layer, and the outer periphery is hermetically sealed with, for example, a sealant to form a layer of the electrolyte composition.

The electrolyte composition of the present disclosure can be suitably used in various electrochemical devices such as electrochromic elements, organic electroluminescence elements, lithium ion secondary cells, solar cells, fuel cells, and ion-conductive actuators. Among others, the electrolyte composition of the present disclosure is suitably used in the electrolyte layer of the below-described electrochromic element. Using the electrolyte composition of the present disclosure as the electrolyte layer of the electrochromic element can prevent imbalance in charges in the electrochromic element to prevent occurrence of the incomplete decoloring phenomenon. As a result, it is possible to provide an electrochromic element having a long lifetime.

The electrochromic element of the present disclosure includes a first electrode, an electrochromic layer on the first electrode, a second electrode, and an electrolyte layer between the electrochromic layer and the second electrode, and preferably includes an electrochemically active layer on the second electrode where the electrochemically active layer contains an inorganic oxide. If necessary, the electrochromic element of the present disclosure further includes other members.

<First electrode>

The material of the first electrode is not particularly limited and may be appropriately selected depending on the intended purpose as long as it is a transparent material having conductivity. Examples of the material of the first electrode include, but are not limited to, inorganic materials such as a tin-doped indium oxide (hereinafter referred to as "ITO"), a fluorine-doped tin oxide, an antimony-doped tin oxide, and zinc oxide.

Alternatively, carbon nanotube having transparency and a highly conductive non-permeable material such as Au, Ag, Pt, or Cu may be formed into a fine network as an electrode having improved conductivity while maintaining transparency.

The thickness of the first electrode is adjusted so that an electrical resistance value necessary for oxidation-reduction reaction of the electrochromic layer is obtained. When the ITO is used as the material of the first electrode, the average thickness of the first electrode is preferably 50 nm or more but 500 nm or less.

A method usable for forming the first electrode is, for example, vacuum vapor deposition, sputtering, or ion plating. The method is not particularly limited as long as the material of the first electrode can be coated. Examples of the method include, but are not limited to, various printing methods such as spin coating, casting, micro gravure coating, gravure coating, bar coating, roll coating, wire bar coating, dip coating, slit coating, capillary coating, spray coating, nozzle coating, gravure printing, screen printing, flexographic printing, offset printing, reverse printing, and inkjet printing.

<Electrochromic layer>

The electrochromic layer contains an electrochromic material having such a property that changes in color through electrochemical oxidation-reduction reaction. If necessary, the electrochromic layer further contains other components.

-Electrochromic material-

The electrochromic material is not particularly limited and may be appropriately selected depending on the intended purpose. Preferably, the electrochromic material is a compound that develops color through oxidation reaction.
Examples of the compound that develops color through oxidation reaction include, but are not limited to, azobenzene compounds, tetrathiafulvalene compounds, triphenylmethane compounds, triarylamine compounds, and leuco dyes. Of these, triarylamine compounds can be more suitably used.
Examples of the triarylamine compounds include, but are not limited to, compounds represented by General Formula 1 below.

$A_n$-$B_m$ General Formula 1

When n is 2, m is 0, and when n is 1, m is 0 or 1.
A is a structure represented by General Formula 2 below and B is a structure represented by General Formula 3 below.
A is bound to B at a position selected from the group consisting of $R_1$ to $R_{15}$ and B is bound to A at a position selected from the group consisting of $R_{16}$ to $R_{21}$.

[Chem. 1]

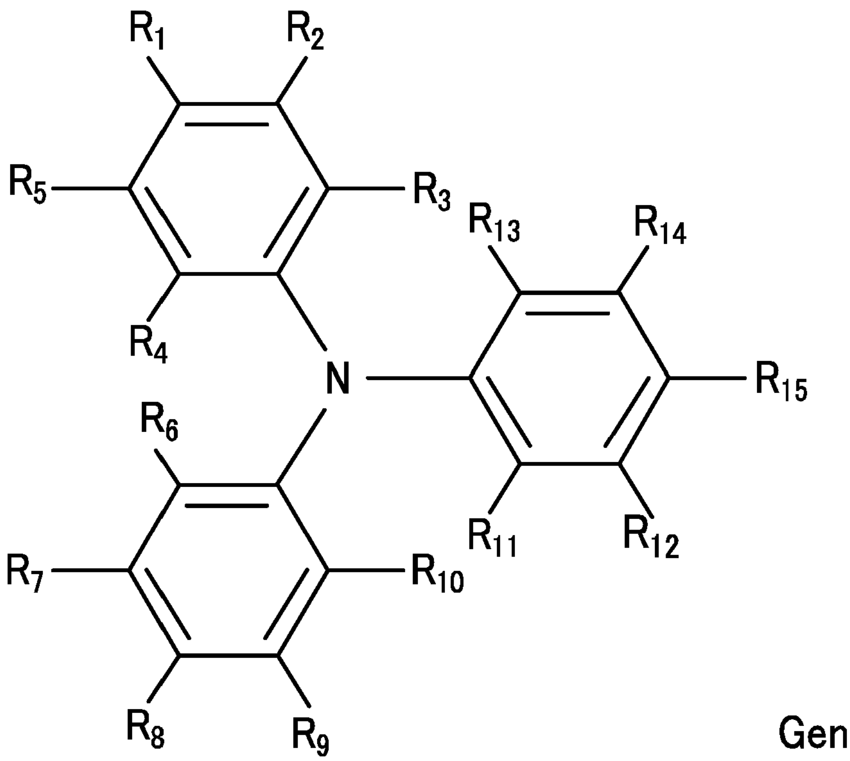

General Formula 2

[Chem. 2]

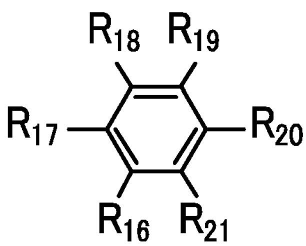

General Formula 3

Preferably, any of $R_1$ to $R_{21}$ in the General Formulae 2 and 3 is chemically bound in the electrochromic layer via a polymerizable functional group or a functional group that can be directly or indirectly bound to a hydroxyl group. This makes

it possible for an oxidation electrochromic compound to be carried on the electrochromic layer. The rest of $R_1$ to $R_{21}$ are all monovalent organic groups and may be identical to or different from each other.

The polymerizable functional group is not particularly limited and may be appropriately selected depending on the intended purpose as long as it is a polymerizable group having a carbon-carbon double bond. Examples of the polymerizable functional group include, but are not limited to, a vinyl group, a styryl group, a 2-methyl-1,3-butadienyl group, a vinylcarbonyl group, an acryloyloxy group, an acryloylamide group, and a vinyl thioether group.

The functional group that can be directly or indirectly bound to a hydroxyl group is not particularly limited and may be appropriately selected depending on the intended purpose as long as it is a functional group that can be directly or indirectly bound to a hydroxyl group via a hydrogen bond, adsorption, or chemical reaction. Specific examples of such a structure include, but are not limited to, a phosphonic acid group, a phosphoric acid group, silyl groups (or silanol groups) such as a trichlorosilyl group, a trialkoxysilyl group, a monochlorosilyl group, and a monoalkoxysilyl group, and a carboxyl group.

Examples of the trialkoxysilyl group include, but are not limited to, a triethoxysilyl group and a trimethoxysilyl group.

Of these, preferable are a phosphonic acid group and a silyl group (a trialkoxysilyl group or a trihydroxysilyl group) each having a high binding force to conductive or semiconductive nanostructures.

The monovalent organic groups are each independently a hydrogen atom, a halogen atom, a hydroxyl group, a nitro group, a cyano group, a carboxyl group, an alkoxycarbonyl group which may have a substituent, an aryloxycarbonyl group which may have a substituent, an alkylcarbonyl group which may have a substituent, an arylcarbonyl group which may have a substituent, an amide group, a monoalkylaminocarbonyl group which may have a substituent, a dialkylaminocarbonyl group which may have a substituent, a monoarylaminocarbonyl group which may have a substituent, a diarylaminocarbonyl group which may have a substituent, a sulfonic acid group, an alkoxysulfonyl group which may have a substituent, an aryloxysulfonyl group which may have a substituent, an alkylsulfonyl group which may have a substituent, an arylsulfonyl group which may have a substituent, a sulfonamide group, a monoalkylaminosulfonyl group which may have a substituent, a dialkylaminosulfonyl group which may have a substituent, a monoarylaminosulfonyl group which may have a substituent, a diarylaminosulfonyl group which may have a substituent, an amino group, a monoalkylamino group which may have a substituent, a dialkylamino group which may have a substituent, an alkyl group which may have a substituent, an alkenyl group which may have a substituent, an alkynyl group which may have a substituent, an aryl group which may have a substituent, an alkoxy group which may have a substituent, an aryloxy group which may have a substituent, an alkylthio group which may have a substituent, an arylthio group which may have a substituent, a heterocyclic group which may have a substituent, and an aralkyl group which may have a substituent.

Of these, preferable are an alkyl group, an alkoxy group, a hydrogen atom, an aryl group, an aryloxy group, a halogen atom, an alkenyl group, and an alkynyl group, in terms of stable operation.

Examples of the halogen atom include, but are not limited to, a fluorine atom, a chlorine atom, a bromine atom, and an iodine atom.

Examples of the alkyl group include, but are not limited to, a methyl group, an ethyl group, a propyl group, and a butyl group.

Examples of the aryl group include, but are not limited to, a phenyl group and a naphthyl group.

Examples of the aralkyl group include, but are not limited to, a benzyl group, a phenethyl group, and a naphthylmethyl group.

Examples of the alkoxy group include, but are not limited to, a methoxyl group, an ethoxy group, and a propoxy group.

Examples of the aryloxy group include, but are not limited to, a phenoxy group, a 1-naphthyloxy group, a 2-naphthyloxy group, a 4-methoxylphenoxy group, and a 4-methylphenoxy group.

Examples of the heterocyclic group include, but are not limited to, carbazole, dibenzofuran, dibenzothiophene, oxadiazole, and thiadiazole.

Examples of a substituent that the above substituent further has include, but are not limited to, halogen atoms, a nitro group, a cyano group, alkyl groups such as a methyl group and an ethyl group, alkoxy groups such as a methoxy group and an ethoxy group, an aryloxy group such as a phenoxy group, aryl groups such as a phenyl group and a naphthyl group, and aralkyl

groups such as a benzyl group and a phenethyl group.

Examples of the triarylamine compounds represented by the above General Formula 1 include, but are not limited to, compounds given below. In the following structural formulae, Me denotes a methyl group and Et denotes an ethyl group

-Exemplary Compound 1-

[Chem. 3]

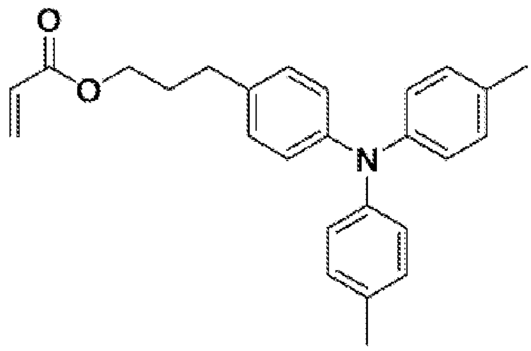

-Exemplary Compound 2-

[Chem. 4]

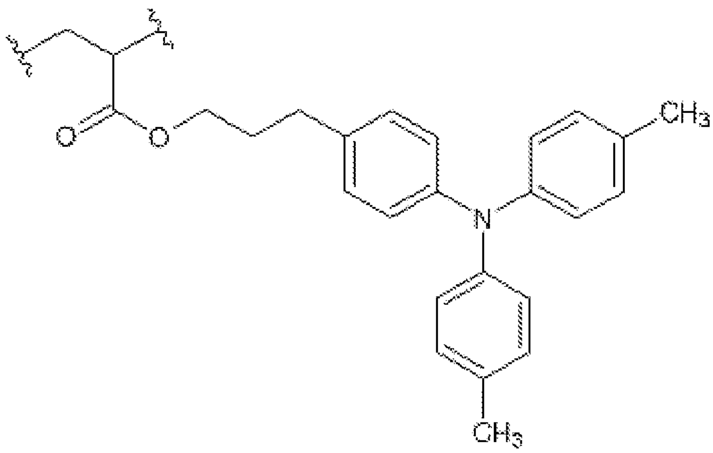

-Exemplary Compound 3-

[Chem. 5]

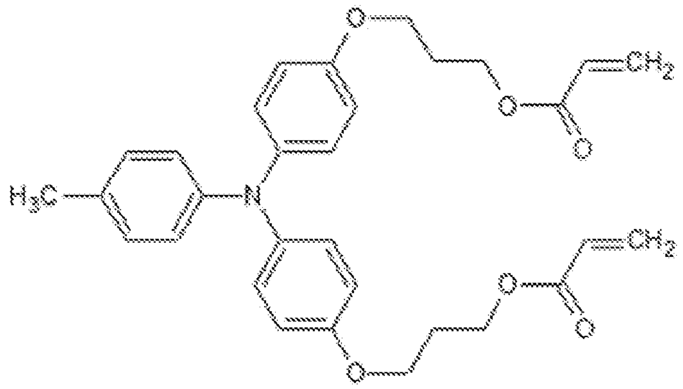

-Exemplary Compound 4-

[Chem. 6]

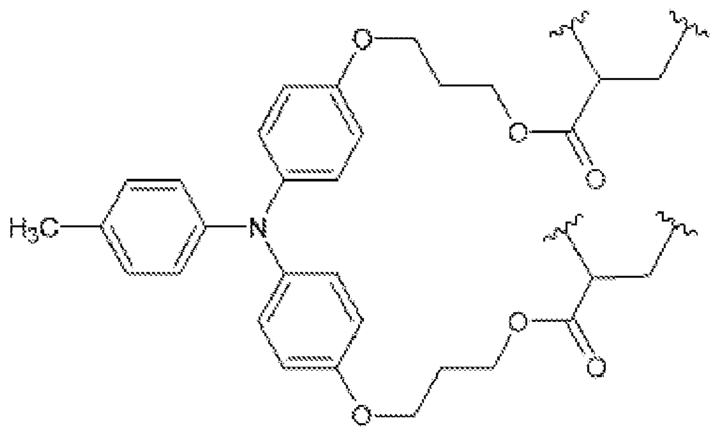

-Exemplary Compound 5-

[Chem. 7]

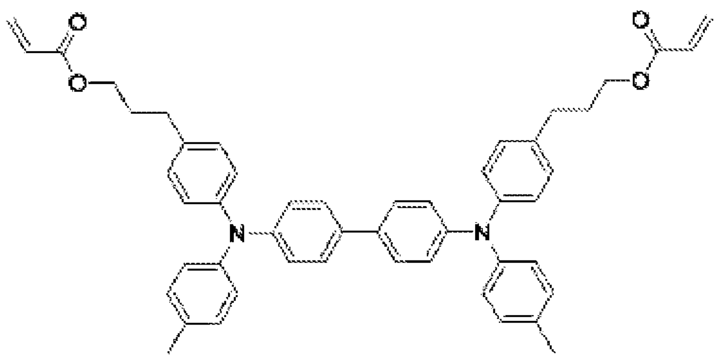

-Exemplary Compound 6-

[Chem. 8]

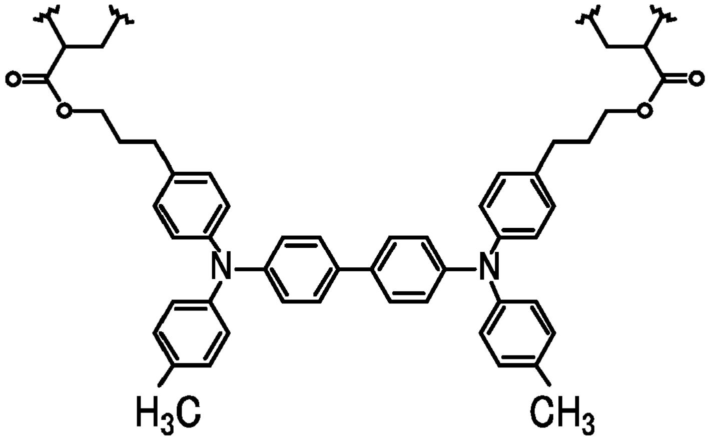

-Exemplary Compound 7-

[Chem. 9]

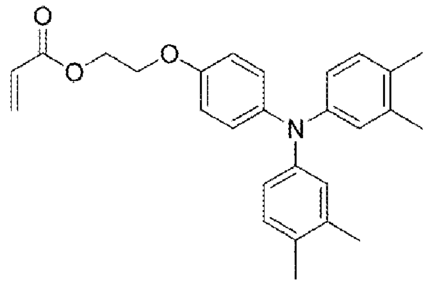

-Exemplary Compound 8-

[Chem. 10]

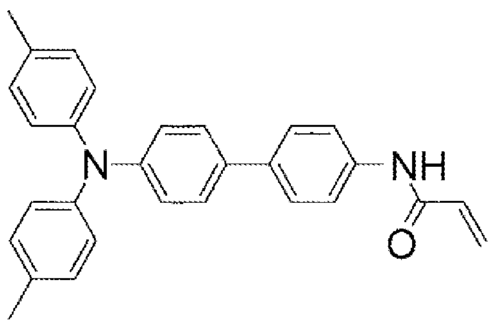

-Exemplary Compound 9-

[Chem. 11]

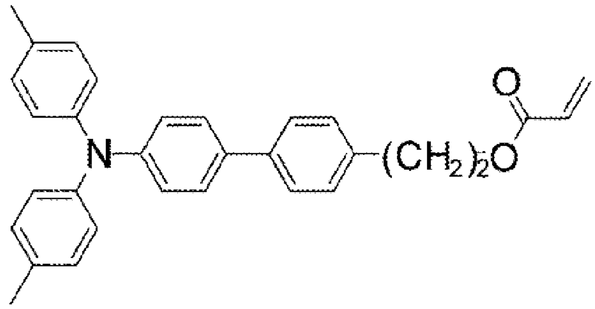

-Exemplary Compound 10-

[Chem. 12]

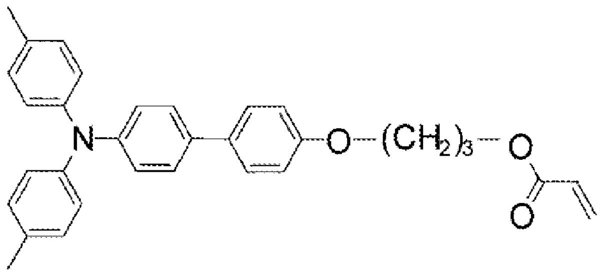

-Exemplary Compound 11-

[Chem. 13]

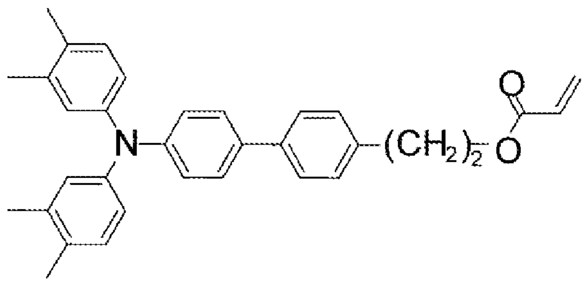

-Exemplary Compound 12-

[Chem. 14]

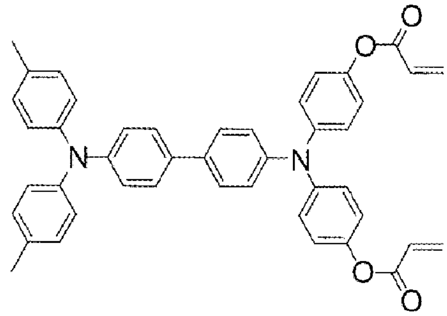

-Exemplary Compound 13-

[Chem. 15]

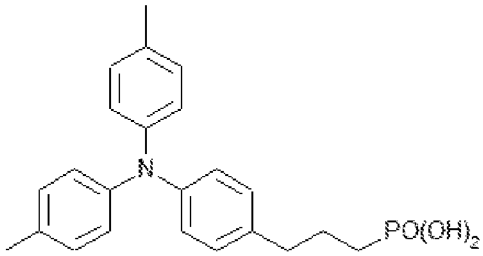

-Exemplary Compound 14-

[Chem. 16]

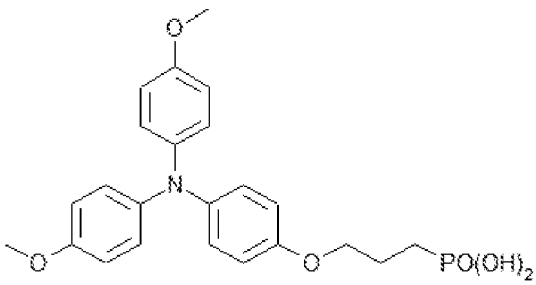

-Exemplary Compound 15-

[Chem. 17]

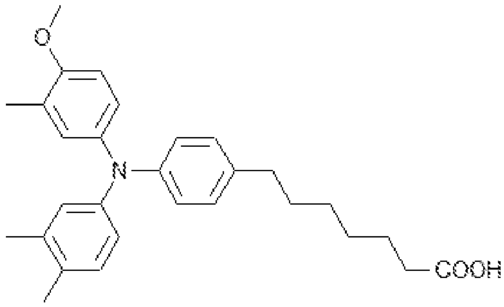

-Exemplary Compound 16-

[Chem. 18]

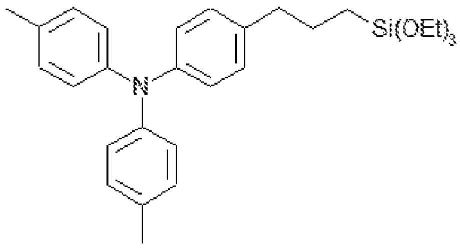

-Exemplary Compound 17-

[Chem. 19]

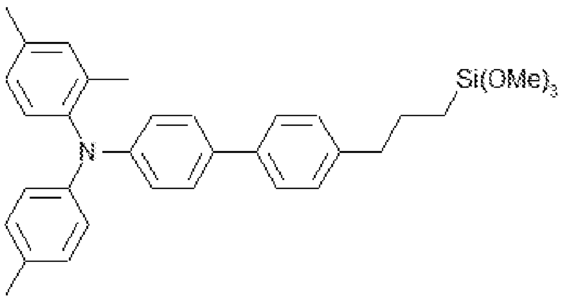

-Exemplary Compound 18-

[Chem. 20]

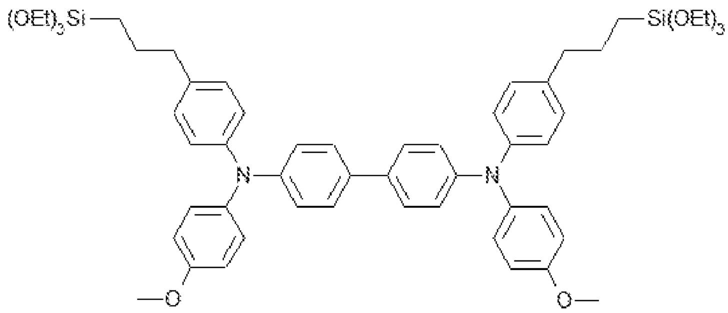

-Exemplary Compound 19-

[Chem. 21]

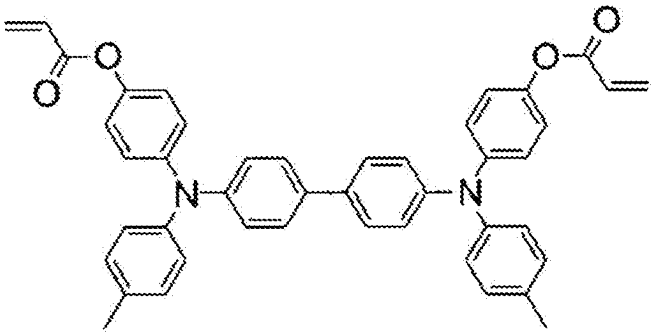

-Exemplary Compound 20-

[Chem. 22]

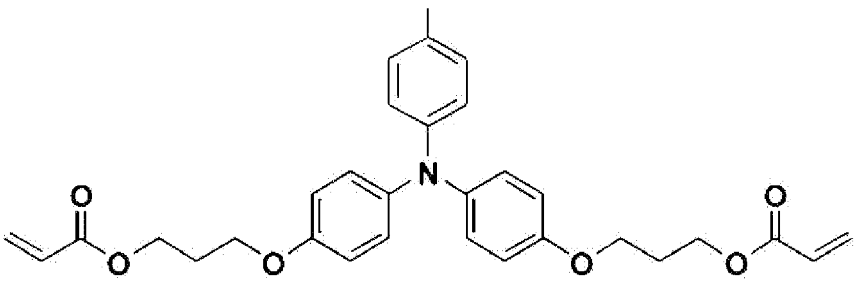

-Binder-

The electrochromic layer may contain a binder.

Examples of the binder include, but are not limited to, polymers such as polyethylene oxide-based polymers, polyvinyl alcohol-based polymers, polyacrylonitrile-based polymers, methacrylate-based polymers, acrylate-based polymers, and vinylidene fluoride-based polymers.

The electrochromic composition may contain a binder precursor rather than the binder. Alternatively, the electrochromic composition may contain both the binder and the binder precursor.

Examples of the binder precursor include, but are not limited to, polymerizable compounds such as monomers.

When the polymerizable compound is used as the binder precursor, for example, the binder is formed by coating

the electrochromic composition containing the polymerizable compound dissolved in liquid, followed by heating or irradiating with non-ionizing radiation, ionizing radiation, infrared rays, or ultraviolet rays to polymerize the polymerizable compound.

The polymerizable compound is not particularly limited as long as it has a polymerizable group. Preferable is a compound that is capable of polymerizing at 25 degrees C.

The polymerizable compound may be monofunctional or polyfunctional. The polymerizable compound that is polyfunctional refers to a compound having two or more polymerizable groups.

The polymerizable compound that is polyfunctional is not particularly limited as long as it is polymerizable by heating or irradiating with non-ionizing radiation, ionizing radiation, or infrared rays. Examples thereof include, but are not limited to, acrylate resins, methacrylate resins, urethane acrylate resins, vinyl ester resins, unsaturated polyesters, epoxy resins, oxetane resins, vinyl ethers, and resins formed from the ene-thiol reaction. Of these, preferable are acrylate resins, methacrylate resins, urethane acrylate resins, and vinyl ester resins in terms of productivity.

Examples of the acrylate resins that are polyfunctional include, but are not limited to, low-molecular-weight compounds such as dipropylene glycol diacrylate and neopentyl glycol diacrylate; difunctional acrylates of, for example, polymer compounds such as polyethylene glycol diacrylate, urethane acrylate, and epoxy acrylate; trifunctional acrylates such as trimethylolpropane triacrylate and pentaerythritol triacrylate; and tetra- or higher-functional acrylates such as pentaerythritol tetraacrylate and dipentaerythritol hexaacrylate.

When the electrochromic composition contains a binder precursor, the electrochromic composition preferably contains a catalyst for polyaddition reaction of the binder precursor or a polymerization initiator.

The catalyst for polyaddition reaction for use may be any catalyst that is appropriately selected from those usually used for the Michael addition reaction. Examples of the catalyst include, but are not limited to, amine catalysts such as diazabicycloundecene (DBU) and N-methyldicyclohexylamine, basic catalysts such as sodium methoxide, sodium ethoxide, potassium t-butoxide, sodium hydroxide, and tetramethylammonium hydroxide, and metal sodium, and butyllithium.

The polymerization initiator for use may be, for example, a photopolymerization initiator or a thermal polymerization initiator

Examples of the thermal polymerization initiator include, but are not limited to: azo compounds such as 2,2'-azobisisobutyronitrile, dimethyl-2,2'-azobis isobutyrate, 2,2'-azobis(2,4-dimethylvaleronitrile), 2,2'-azobis[2-(2-imidazolin-2-yl)propane]; and organic peroxides such as 2,5-dimethyl-2,5-bis(tert-butylperoxy)hexane and di(4-tert-butylcyclohexyl)peroxy dicarbonate. These may be used alone or in combination.

Examples of the photopolymerization initiator include, but are not limited to: ketal-based photopolymerization initiators such as 2,2-dimethoxy-1,2-diphenylethan-1-one; acetophenone-based photopolymerization initiators such as 1-hydroxycyclohexyl phenyl ketone, 2,2-diethoxyacetophenone, 2,2-dimethoxy-2-phenylacetophenone, 4-phenoxydichloroacetophenone, and 4-(t-butyl)dichloroacetophenone; and benzoin-based photopolymerization initiators such as benzoin methyl ether, benzoin ethyl ether, benzoin propyl ether, benzoin isopropyl ether, and benzoin isobutyl ether. These may be used alone or in combination.

The amount of the photopolymerization initiator contained is not particularly limited and may be appropriately selected depending on the intended purpose, but is preferably 0.001 parts by mass or more but 5 parts by mass or less, more preferably 0.01 parts by mass or more but 2 parts by mass or less, and 0.01 parts by mass or more but 1 part by mass or less, relative to 100 parts by mass of all the monomer components.

<Other components>

The other components are not particularly limited and may be appropriately selected depending on the intended purpose. Examples of the other components include, but are not limited to, fillers, solvents, plasticizers, levelling agents, sensitizers, dispersing agents, surfactants, and antioxidants.

<Electrolyte layer>

The electrolyte layer is a layer that is capable of conducting ions for supplying the ions to the electrochromic layer.

The electrolyte layer is preferably a transparent layer in terms of properties as a display device and a light-controlling device of the electrochromic element.

For the electrolyte layer, the electrolyte composition of the present disclosure can be used. The average thickness of the electrolyte layer is not particularly limited and may be appropriately selected depending on the intended purpose, but is preferably 100 nm or more but 100 micrometers or less.

<Second electrode>

The second electrode is formed to face the first electrode. The second electrode for use may be a transparent electrode similar to the first electrode, or may be an electrode that is not transparent. When a transparent electrode is formed as the second electrode, examples of materials used for the second electrode include, but are not limited to, inorganic materials such as a tin-doped indium oxide (ITO), a fluorine-doped tin oxide, an antimony-doped tin oxide, and zinc oxide. Alternatively, carbon nanotube having transparency and a highly conductive non-permeable material such as Au, Ag, Pt, or Cu may be formed into a fine network as the second electrode having improved conductivity while maintaining transparency.
When the second electrode is an electrode that is not transparent, a metal plate of, for example, Pt, Au, Cu, Al, Ti, or stainless steel can be used.
A method of forming the second electrode is similar to that for the first electrode.

<Electrochemically active layer>

The electrochemically active layer is formed on the second electrode for compensating charges used for color development of the electrochromic layer at the time of color development of the electrochromic element.
The electrochemically active layer refers to a layer that is capable of reversibly accumulating or releasing charges in an electrostatic and/or oxidation-reduction reactive manner.
The electrochemically active layer preferably has a stacked structure of conductive or semi-conductive particles. Specifically, particles having particle diameters of from about 5 nm through about 50 nm are sintered on the surface of the electrode to form the electrochemically active layer. Such a structure can accumulate charges by the effect of the large surface of particles.
The conductive or semi-conductive particles are not particularly limited and may be appropriately selected depending on the intended purpose, but an inorganic oxide is preferable.
Examples of the inorganic oxide include, but are not limited to, titanium oxide, zinc oxide, tin oxide, zirconium oxide, cerium oxide, yttrium oxide, boron oxide, magnesium oxide, strontium titanate, potassium titanate, barium titanate, calcium titanate, calcium oxide, ferrite, hafnium oxide, tungsten oxide, iron oxide, copper oxide, nickel oxide, cobalt oxide, barium oxide, strontium oxide, vanadium oxide, aluminosilicic acid, calcium phosphate, and aluminosilicate. These may be used alone or in combination. Of these, in terms of physical properties such as electrical properties (e.g., electroconductivity) and optical properties, titanium oxide, zinc oxide, tin oxide, zirconium oxide, iron oxide, magnesium oxide, indium oxide, and tungsten oxide are preferable, and tin oxide is particularly preferable. The tin oxide may be doped with an element other than tin.
The conductive or semi-conductive particles can also serve as the inorganic oxide contained in the electrochemically active layer. Separately from this, an inorganic oxide may be contained in the electrochemically active layer. For example, an inorganic oxide can be formed as a thin film on the second electrode by, for example, vacuum vapor deposition, sputtering, or ion plating, to form the electrochemically active layer. The inorganic oxide for use may be, for example, those similar to the inorganic oxides used as the conductive or semi-conductive particles.
Various printing methods can be used as long as the material of the electrochemically active layer can be coated to form the electrochemically active layer. Examples of the printing methods include, but are not limited to, spin coating, casting, microgravure coating, gravure coating, bar coating, roll coating, wire bar coating, dip coating, slit coating, capillary coating, spray coating, nozzle coating, gravure printing, screen printing, flexographic printing, offset printing, reverse printing, and inkjet printing. Of these, in terms of productivity, the electrochemically active layer is preferably formed through coating as a paste in which particles are dispersed.
The average thickness of the electrochemically active layer is not particularly limited and may be appropriately selected depending on the intended purpose, but is preferably 0.2 micrometers or more but 5.0 micrometers or less. When the average thickness thereof is less than 0.2 micrometers, the intended density of color developed may be difficult to achieve. When it is more than 5.0 micrometers, production cost increases and visibility decreases easily.

<Counter electrochromic layer (second electrochromic layer)>

The electrochemically active layer can also contain an electrochromic compound for improving the density of color developed and controlling the color at the time of color development.
In this case, the electrochemically active layer becomes a second electrochromic layer (counter electrochromic layer). The electrochromic layer in contact with the first electrode (first electrochromic layer) and the second electrochromic layer are required to cause changes of coloring and decoloring at the same time.
In the present disclosure, the first electrochromic layer develops color through oxidation reaction, and thus the second electrochromic layer preferably contains an electrochromic material that develops color through reduction

reaction.

-Electrochromic material that develops color through reduction reaction-

Examples of the electrochromic material that develops color through reduction reaction, which is contained in the second electrochromic layer, include, but are not limited to, polymer-based or pigment-based electrochromic compounds.

Examples of the electrochromic material that develops color through reduction reaction include, but are not limited to: low-molecular-weight organic electrochromic compounds such as azobenzene-based compounds, anthraquinone-based compounds, diarylethene-based compounds, dihydroprene-based compounds, dipyridine-based compounds, styryl-based compounds, styrylspiropyran-based compounds, spirooxazine-based compounds, spirothiopyran-based compounds, thioindigo-based compounds, tetrathiafulvalene-based compounds, terephthalic acid-based compounds, triphenylmethane-based compounds, triphenylamine-based compounds, naphthopyran-based compounds, viologen-based compounds, pyrazoline-based compounds, phenazine-based compounds, phenylenediamine-based compounds, phenoxazine-based compounds, phenothiazine-based compounds, phthalocyanine-based compounds, fluoran-based compounds, fulgide-based compounds, benzopyran-based compounds, and metallocene-based compounds; and conductive polymer compounds such as polyaniline and polythiophene. These may be used alone or in combination. Of these, viologen derivatives are preferable in terms of coloring and decoloring at low potentials and of exhibiting good color values.

The electrochromic material that develops color through reduction reaction is more preferably a compound having at least one of a phosphonic acid group and a phosphoric acid group for allowing it to be adsorbed onto the inorganic oxide contained in the second electrochromic layer.

Examples of the electrochromic material that develops color through reduction reaction include, but are not limited to, exemplary compounds given below.

<Exemplary Compound R1>

[Chem. 23]

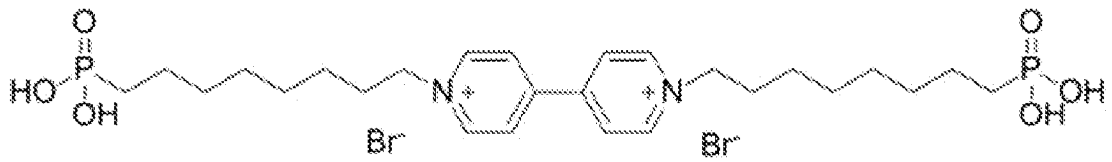

<Exemplary Compound R2>

[Chem. 24]

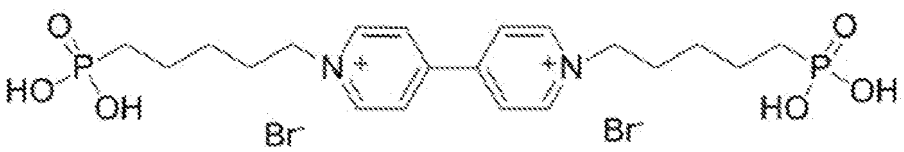

<Exemplary Compound R3>

[Chem. 25]

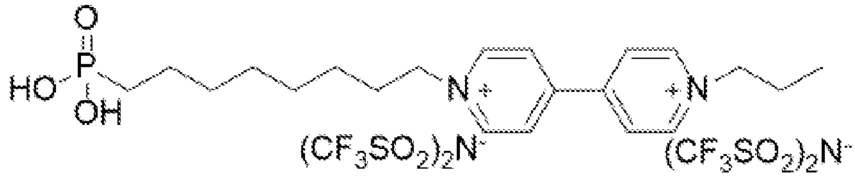

<Other members>

The other members are not particularly limited and may be appropriately selected depending on the intended purpose. Examples of the other members include, but are not limited to, a support, an insulating porous layer, a deterioration preventing layer, a protective layer, and a white color-reflecting layer.

-Support-

The support is not particularly limited in terms of, for example, the shape, structure, size, and material thereof, and may be appropriately selected depending on the intended purpose as long as it is formed of a transparent material that is capable of supporting the layers and has a structure that is capable of supporting the layers.
The shape of the support is not particularly limited and may be appropriately selected depending on the intended purpose. Examples of the shape thereof include, but are not limited to, a flat plate shape and a shape having a curved plane.
The structure of the support is not particularly limited and may be appropriately selected depending on the intended purpose.
The size of the support is not particularly limited and may be appropriately selected depending on the intended purpose.
The material of the support may be any material as long as it is transparent. Well-known organic or inorganic materials can be used without any pre-treatment. Examples thereof include, but are not limited to: glass substrates of, for example, alkali-free glass, borosilicate glass, float glass, and soda-lime glass; and resin substrates of, for example, polycarbonate resin, acrylic resin, polyethylene, polyvinyl chloride, polyester, epoxy resin, melamine resin, phenol resin, polyurethane resin, and polyimide resin.
The surface of the support may be provided with, for example, a transparent insulating layer, a UV cut layer, and an antireflection layer for enhancing moisture barrier property, gas barrier property, UV resistance, and visual recognition.

-Insulating porous layer-

The insulating porous layer has a function of separating the first electrode and the second electrode from each other for electrical insulation, and of holding an electrolyte. The material of the insulating porous layer is not particularly limited as long as the material is porous. It is preferable to use organic materials and inorganic materials having a high insulating property, a high durability, and an excellent film formation property, and composite materials of these materials.
Examples of the method for forming the insulating porous layer include, but are not limited to, a sintering method (use of pores generated between polymeric particles or inorganic particles partially fused with each other by the addition of, for example, a binder), an extraction method (forming a layer using, for example, an organic material or an inorganic material soluble in a solvent and a binder insoluble in a solvent, and subsequently dissolving the organic material or the inorganic material in a solvent to obtain pores), a foaming method, a phase inversion method of operating a good solvent and a poor solvent to induce phase separation in a mixture of, for example, polymeric compounds, and a radiation irradiation method of radiating various radioactive rays to form pores.

-Deterioration preventing layer-

The role of the deterioration preventing layer is to cause an opposite chemical reaction to that in the electrochromic layer and strike a balance of charges, to suppress corrosion and deterioration of the first electrode layer and the second electrode layer due to the irreversible oxidation-reduction reaction therein. The opposite reaction includes not only oxidation and reduction caused by the deterioration preventing layer but also the deterioration preventing layer acting as a capacitor.
The material of the deterioration preventing layer is not particularly limited and may be appropriately selected depending on the intended purpose as long as the material can have a role in preventing corrosion of the first electrode

layer and the second electrode layer due to the irreversible oxidation-reduction reaction thereof. Examples of the material include, but are not limited to, conductive or semi-conductive metal oxides including antimony tin oxide, nickel oxide, titanium oxide, zinc oxide, tin oxide, or two or more thereof.

The deterioration preventing layer can be a porous thin film that does not inhibit entry of the electrolyte. For example, conductive or semi-conductive metal oxide particles such as antimony tin oxide, nickel oxide, titanium oxide, zinc oxide, and tin oxide can be fixed to the second electrode via a binder resin such as an acrylic-based resin, an alkyd-based resin, an isocyanate-based resin, a urethane-based resin, an epoxy-based resin, and a phenol-based resin, to obtain a suitable porous thin film that ensures permeation of the electrolyte and has the functions of the deterioration preventing layer.

-Protective layer-

The role of the protective layer is to protect the element from an external stress and chemicals used in a washing step, prevent leakage of the electrolyte, and prevent intrusion of unnecessary matters for the electrochromic element to operate stably, such as moisture and oxygen in the air.

The average thickness of the protective layer is not particularly limited and may be appropriately selected depending on the intended purpose, but is preferably 1 micrometer or less but 200 micrometers or more.

The material of the protective layer for use can be, for example, a UV curable resin or a thermosetting resin. Specific examples thereof include, but are not limited to, acrylic-based resin, urethane-based resins, and epoxy-based resins.

The electrochromic element of the present disclosure exhibits a decoloring rate, which is calculated from Mathematical Formula 1 below, of preferably 95% or higher and more preferably 97% or higher.

-Mathematical Formula 1-

$$\text{Decoloring rate (\%)} = (T2/T1) \times 100$$

In the Mathematical Formula 1, when a voltage of 1.2 V is applied for 1 hour to between a pair of electrodes facing each other in the electrochromic element for coloring driving and then the pair of electrodes are short circuited for 30 minutes for decoloring driving, T1 is a luminous transmittance before the coloring driving and T2 is a luminous transmittance after the decoloring driving.

Referring to the drawings, embodiments of the electrochromic element of the present disclosure will be described. In the drawings, the same members are given the same reference numerals, and duplicate explanations may be omitted.

<First embodiment>

FIG. 1 is a schematic view of an electrochromic element according to a first embodiment. The electrochromic element of FIG. 1 includes a first electrode 1, an electrochromic layer 2 on the first electrode 1, a second electrode 5, an electrochemically active layer 4 that is on the second electrode 5 and contains an inorganic oxide, and an electrolyte layer 3 between the electrochromic layer 4 and the second electrode 5.

<Second embodiment>

FIG. 2 is a schematic view of an electrochromic element according to a second embodiment. In the electrochromic element of FIG. 2, a counter electrochromic layer (second electrochromic layer) 6 serves as the electrochemically active layer 4. The first electrochromic layer 2 in contact with the first electrode 1, and the second electrochromic layer 6 are required to cause changes of coloring and decoloring at the same time.

The first electrochromic layer 2 develops color through oxidation reaction, and thus the second electrochromic layer 6 preferably contains an electrochromic material that develops color through reduction reaction.

(Electrochromic light-controlling device)

An electrochromic light-controlling device of the present disclosure includes the electrochromic element of the present disclosure, and if necessary, further includes other members.

The other members are not particularly limited and may be appropriately selected depending on the intended purpose. Examples of the other members include, but are not limited to, a power source, a fixing unit, and a control unit.

Examples of the electrochromic light-controlling device include, but are not limited to, anti-glare mirrors, light-controlling glass, light-controlling spectacles, binoculars, opera glasses, goggles used for riding bicycles, and clocks and watches.

(Electrochromic display device)

An electrochromic display device of the present disclosure includes the electrochromic element of the present disclosure, and if necessary, further includes other units.

The other units are not particularly limited and may be appropriately selected depending on the intended purpose. Examples of the other units include, but are not limited to, a power source, a fixing unit, and a control unit.

Examples of the electrochromic display device include, but are not limited to, electronic paper, electronic albums, electronic advertising boards, and displays.

[Examples]

The present disclosure will be described below by way of Examples. The present disclosure should not be construed as being limited to these Examples.

(Example 1)

<Production of electrochromic element>

-Formation of first electrode and electrochromic layer-

A glass substrate having a size of 40 mm×40 mm and an average thickness of 0.7 mm was provided as a transparent support. An ITO film having an average thickness of about 100 nm was formed through sputtering on the transparent support, to form a first electrode. The sheet resistance of the first electrode was found to be 40 Ω/sq.

Next, an electrochromic solution was prepared by mixing polyethylene oxide diacrylate (PEG400DA, obtained from Nippon Kayaku Co. Ltd.), a photoinitiator (IRG184, obtained from BASF SE), a triarylamine compound having Structural Formula A below, a triarylamine compound having Structural Formula B below, and cyclohexanone (obtained from Kanto Chemical Industry Co., Ltd.) at a mass proportion of 20:1:14:6:500.

Next, the electrochromic solution was coated on the first electrode, followed by curing with UV irradiation in a nitrogen atmosphere, to form an electrochromic layer in an electrochromic reactive region (30 mm×30 mm) of the surface of the ITO film. The electrochromic layer was found to have an average thickness of 1.3 micrometers.

-Structural Formula A-

[Chem. 26]

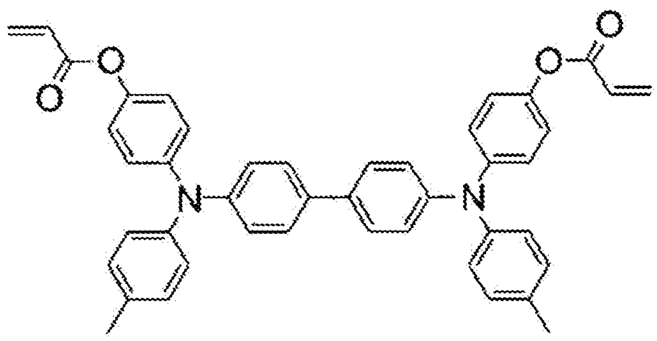

-Structural Formula B-

[Chem. 27]

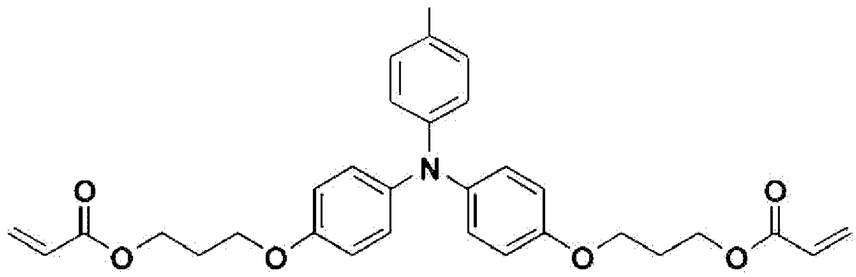

-Formation of second electrode-

In the same manner as in the first electrode, an ITO film having an average thickness of about 100 nm was formed through sputtering on a glass substrate having a size of 40 mm×40 mm and an average thickness of 0.7 mm, to form a second electrode.

-Formation of electrochemically active layer-

A thickener was added to a dispersion liquid of tin oxide particles (dispersed in methanol, concentration of solid portion: 50% by mass, average particle diameter: 18 nm). The mixture was coated on the second electrode through screen printing. The resultant was annealed at 120 degrees C for 15 minutes to obtain a tin oxide particles film having an average thickness of about 3.5 micrometers, to form an electrochemically active layer in the electrochromic reactive region (30 mm×30 mm) of the surface of the ITO film.

-Formation of electrolyte layer-

Polyethylene glycol diacrylate (PEG400DA, obtained from Nippon Kayaku Co. Ltd.), a photoinitiator (IRG184, obtained from BASF SE), and an electrolyte (1-ethyl-3-methylimidazolium bisfluorosulfonimide, obtained from Kanto Chemical Industry Co., Ltd.) were mixed at a mass proportion of 100:5:100, to prepare an electrolyte precursor. The electrolyte precursor and a basic compound (poly(4-vinylpyridine), weight average molecular weight (Mw): 60,000, obtained from Sigma-Aldrich Co. LLC) were mixed at a mass proportion of 100:0.05 (electrolyte precursor:basic compound) to prepare a solution. The solution was coated on the electrochromic layer of the glass substrate using a dispenser. The resultant glass substrate was bonded to the glass substrate having the electrochemically active layer using a vacuum bonding device, followed by curing with ultraviolet rays (UV), to form an electrolyte layer.

After that, the outer periphery of the element was sealed with a UV adhesive (PHOTOREC E, low-moisture-permeation type, obtained from Sekisui Chemical Co., Ltd.). Through the above procedure, an electrochromic element of Example 1 as illustrated in FIG. 1 was formed.

(Example 2)

An electrochromic element of Example 2 as illustrated in FIG. 2 was produced in the same manner as in Example 1 except that the tin oxide particles film in Example 1 was subjected to an additional treatment to from a second electrochromic layer.

<Formation of second electrochromic layer>

The tin oxide particles film obtained in the same manner as in Example 1 was coated through spin coating with a 2,2,3,3-tetrafluoropropanol solution containing 2.0% by mass of a reducible electrochromic compound represented by Structural Formula C below. The resultant was annealed at 120 degrees C for 10 minutes to adsorb the reducible electrochromic compound on the tin oxide particles film, to form a reducible second electrochromic layer.

-Structural Formula C-

[Chem. 28]

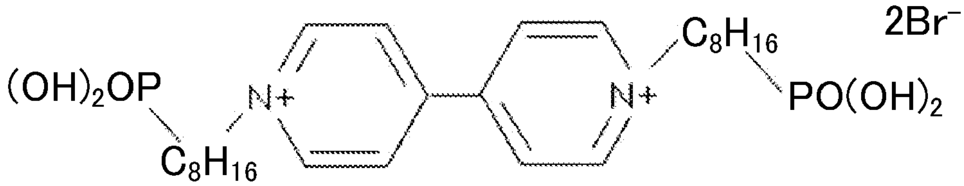

(Examples 3, 5, 7, 14, 15, 20, 22, 31, 33, and 35)

Electrochromic elements of Examples 3, 5, 7, 14, 15, 20, 22, 31, 33, and 35 as illustrated in FIG. 1 were produced in the same manner as in Example 1 except that the kind of the basic compound used in the electrolyte layer and the mass proportion (electrolyte precursor:basic compound B) were changed as in Table 1 and Table 2.

(Example 49)

An electrochromic element of Example 49 as illustrated in FIG. 1 was produced in the same manner as in Example 1 except that the electrochemically active layer was formed in the following different manner.

<Formation of electrochemically active layer>

A titanium oxide nanoparticles-dispersed liquid (product name: SP210, obtained from Showa Titanium Co. Ltd., average particle diameter: about 20 nm) was coated on the second electrode through spin coating. The resultant was further annealed at 120 degrees C for 15 minutes to obtain a titanium oxide particles film having an average thickness of about 2.5 micrometers, to form an electrochemically active layer in the electrochromic reactive region (30 mm×30 mm) of the surface of the ITO film.

(Example 51)

An electrochromic element of Example 51 as illustrated in FIG. 1 was produced in the same manner as in Example 1 except that the electrolyte layer was formed in the following different manner.

<Formation of electrolyte layer>

Dimethoxypolyethylene glycol (UNIOX MM400, obtained from NOF CORPORATION) and an electrolyte (1-ethyl-3-methylimidazolium bisfluorosulfonimide, obtained from Kanto Chemical Industry Co., Ltd.) were mixed at a mass proportion of 100:100 to form an electrolyte precursor. The electrolyte precursor and a basic compound (poly(4-vinylpyridine), weight average molecular weight (Mw): 60,000, obtained from Sigma-Aldrich Co. LLC) were mixed at a mass proportion of 100:0.05 (electrolyte precursor:basic compound) to prepare a solution. The solution was coated on the electrochromic layer of the glass substrate using a dispenser. The resultant glass substrate was bonded to the glass substrate having the electrochemically active layer using a vacuum bonding device, to form an electrolyte layer.

(Examples 52 to 54)

Electrochromic elements of Examples 52 to 54 as illustrated in FIG. 1 were produced in the same manner as in Example 51 except that the kind of the basic compound used in the electrolyte layer and the mass proportion (electrolyte precursor:basic compound B) were changed as in Table 3.

(Examples 4, 6, 8 to 13, 16 to 19, 21, 23 to 30, 32, 34, and 36 to 48)

Electrochromic elements of Examples 4, 6, 8 to 13, 16 to 19, 21, 23 to 30, 32, 34, and 36 to 48 as illustrated in FIG. 2 were produced in the same manner as in Example 2 except that the kind of the basic compound used in the electrolyte layer and the mass proportion (electrolyte precursor:basic compound B) were changed as in Table 1 and Table 2.

(Example 50)

An electrochromic element of Example 50 as illustrated in FIG. 2 was produced in the same manner as in Example 2 except that the electrochemically active layer was formed in the following different manner.

<Formation of electrochemically active layer>

A titanium oxide nanoparticles-dispersed liquid (product name: SP210, obtained from Showa Titanium Co. Ltd., average particle diameter: about 20 nm) was coated on the second electrode through spin coating. The resultant was further annealed at 120 degrees C for 15 minutes to obtain a titanium oxide particles film having an average thickness of about 2.5 micrometers, to form an electrochemically active layer in the electrochromic reactive region (30 mm×30 mm) of the surface of the ITO film.

(Example 55)

An electrochromic element of Example 55 as illustrated in FIG. 2 was produced in the same manner as in Example 2 except that the electrolyte layer was formed in the following different manner.

<Formation of electrolyte layer>

Dimethoxypolyethylene glycol (UNIOX MM400, obtained from NOF CORPORATION) and an electrolyte (1-ethyl-3-methylimidazolium bisfluorosulfonimide, obtained from Kanto Chemical Industry Co., Ltd.) were mixed at a mass proportion of 100:100 to form an electrolyte precursor. The electrolyte precursor and a basic compound (poly(4-vinylpyridine), weight average molecular weight (Mw): 60,000, obtained from Sigma-Aldrich Co. LLC) were mixed at a mass proportion of 100:0.05 (electrolyte precursor:basic compound) to prepare a solution. The solution was coated on the electrochromic layer of the glass substrate using a dispenser. The resultant glass substrate was bonded to the glass substrate having the electrochemically active layer using a vacuum bonding device, to form an electrolyte layer.

(Examples 56 to 71)

Electrochromic elements of Examples 56 to 71 as illustrated in FIG. 2 were produced in the same manner as in Example 55 except that the kind of the basic compound used in the electrolyte layer and the mass proportion (electrolyte precursor:basic compound B) were changed as in Table 3.

(Comparative Example 1)

An electrochromic element of Comparative Example 1 as illustrated in FIG. 1 was produced in the same manner as in Example 1 except that no basic compound was added to the electrolyte layer as in Table 2.

(Comparative Example 2)

An electrochromic element of Comparative Example 2 as illustrated in FIG. 2 was produced in the same manner as in Example 2 except that no basic compound was added to the electrolyte layer as in Table 2.

(Comparative Example 3)

An electrochromic element of Comparative Example 3 as illustrated in FIG. 2 was produced in the same manner as in Example 2 except that an acid compound, ethyl phosphate (obtained from Tokyo Chemical Industry Co., Ltd.) was used in the electrolyte layer as in Table 2.

(Comparative Example 4)

An electrochromic element of Comparative Example 4 as illustrated in FIG. 1 was produced in the same manner as in Example 51 except that no basic compound was added to the electrolyte layer as in Table 3.

(Comparative Example 5)

An electrochromic element of Comparative Example 5 as illustrated in FIG. 2 was produced in the same manner

as in Example 55 except that no basic compound was added to the electrolyte layer as in Table 3.

Next, each of the electrochromic elements produced was subjected to a coloring/decoloring driving test in the following manner. The results are presented in Table 1 to Table 3.

<Coloring/decoloring driving test>

In each of the electrochromic elements produced, a constant voltage (1.2 V) was applied for 1 hour to between the pair of electrodes facing each other, to develop color (coloring driving). Then, the electrodes were short circuited for 30 minutes for decoloring (decoloring driving). Before and after the above coloring driving and decoloring driving, a luminous transmittance of the element was calculated from a transmission spectrum measured using USB4000 obtained from Ocean Optics, Co.

A decoloring rate A [%] was calculated from Mathematical Formula 1 below, with T1 being a luminous transmittance before the coloring/decoloring driving test and T2 being a luminous transmittance after the coloring/decoloring driving test. When the incomplete decoloring phenomenon does not occur at all and the color is completely erased, the luminous transmittance remains unchanged between before and after the coloring/decoloring driving test. In this case, T1 and T2 take the same values and the decoloring rate A becomes 100%. As the decoloring rate A is closer to 100, an electrochromic element not causing the incomplete decoloring phenomenon can be obtained.

-Mathematical Formula 1-

$$\text{Decoloring rate A (\%)} = (T2/T1)\times 100$$

-Criteria for judgment-

A: The decoloring rate A was 95% or higher, and the color was able to be erased properly.
B: The decoloring rate A was lower than 95%, and the color was unable to be erased and the incomplete decoloring phenomenon occurred.

[Table 1]

| | Basic Compound: B | Mass ratio (Electrolyte precursor : B) | Layer configuration | Decoloring rate A [%] | Judgment |
|---|---|---|---|---|---|
| Ex. 1 | Polv(4-vinylpyridine) (Mw=60,000) (Sigma-Aldritch) | 100:0.05 | FIG. 1 | 99 | A |
| Ex. 2 | Polv(4-vinylpyridine) (Mw=60.000) (Sigma-Aldritch) | 100:0.05 | FIG. 2 | 100 | A |
| Ex. 3 | Poly(2-vinylpyridine) (Mw=37,500) (Sigma-Aldritch) | 100:0.05 | FIG. 1 | 99 | A |
| Ex. 4 | Poly(2-vinylpyridine) (Mw=37,500) (Sigma-Aldritch) | 100:0.05 | FIG. 2 | 99 | A |
| Ex. 5 | Poly(4-vinylpyridine) (Mw=160,000) (Sigma-Aldritch) | 100:0.05 | FIG. 1 | 100 | A |
| Ex. 6 | Poly(4-vinylpyridine) (Mw=160,000) (Sigma-Aldritch) | 100:0.05 | FIG. 2 | 99 | A |
| Ex. 7 | Poly(2-vinylpyridine) (Mw=159,000) (Sigma-Aldritch) | 100:0.05 | FIG. 1 | 99 | A |
| Ex. 8 | Poly(2-vinylpyridine) (Mw=159,000) (Sigma-Aldritch) | 100:0.05 | FIG. 2 | 99 | A |
| Ex. 9 | Polv(4-vinylpyridine-co-styren) (Sigma-Aldritch) | 100:0.05 | FIG. 2 | 98 | A |

(continued)

| | Basic Compound: B | Mass ratio (Electrolyte precursor : B) | Layer configuration | Decoloring rate A [%] | Judgment |
|---|---|---|---|---|---|
| Ex. 10 | Poly(4-vinylpyridine-co-butyl methacrylate) (Sigma-Aldritch) | 100:0.05 | FIG. 2 | 100 | A |
| Ex. 11 | Poly(2-vinylpyridine-co-styren) (Sigma-Aldritch) | 100:0.05 | FIG. 2 | 98 | A |
| Ex. 12 | Polyacrylamide (Mn=40,000) (Sigma-Aldritch) | 100:2 | FIG. 2 | 97 | A |
| Ex. 13 | Poly(dimethylaminoethyl methacrylate) (Mn=50,000) (Tokyo Chemical Industry Co., Ltd.) | 100:0.02 | FIG. 2 | 100 | A |
| Ex. 14 | Poly(4-vinylpyridine) (Mw=60,000) (Sigma-Aldritch) | 100:0.01 | FIG. 1 | 98 | A |
| Ex. 15 | Poly(4-vinylpyridine) (Mw=60,000) (Sigma-Aldritch) | 100:0.03 | FIG. 1 | 99 | A |
| Ex. 16 | Poly(4-vinylpyridine) (Mw=60,000) (Sigma-Aldritch) | 100:0.01 | FIG. 2 | 98 | A |
| Ex. 17 | Polv(4-vinylpyridine) (Mw=60.000) (Sigma-Aldritch) | 100:0.03 | FIG. 2 | 99 | A |
| Ex. 18 | Polv(4-vinylpyridine) (Mw=60.000) (Sigma-Aldritch) | 100:0.07 | FIG. 2 | 100 | A |
| Ex. 19 | Poly(4-vinylpyridine) (Mw=60,000) (Sigma-Aldritch) | 100:0.1 | FIG. 2 | 100 | A |
| Ex. 20 | 2-(Dimethylamino)ethyl acrylate (Tokyo Chemical Industry Co., Ltd.) | 100:0.02 | FIG. 1 | 99 | A |
| Ex. 21 | 2-(Dimethylamino)ethyl acrylate (Tokyo Chemical Industry Co., Ltd.) | 100:0.02 | FIG. 2 | 100 | A |
| Ex. 22 | N-[3-(Dimethylamino)propyl]acrylamide (Tokyo Chemical Industry Co., Ltd.) | 100:0.02 | FIG. 1 | 99 | A |
| Ex. 23 | N-[3-(Dimethylamino)propyl]acrylamide (Tokyo Chemical Industry Co., Ltd.) | 100:0.02 | FIG. 2 | 100 | A |
| Ex. 24 | N,N-Dimethylacrylamide (Tokyo Chemical Industry Co., Ltd.) | 100:2 | FIG. 2 | 99 | A |
| Ex. 25 | 3-[(3-Acrylamidopropyl)dimethylammonio]propanoate (Tokyo Chemical Industry Co., Ltd.) | 100:0.02 | FIG. 2 | 100 | A |

[Table 2]

| | Basic Compound: B | Mass ratio (Electrolyte precursor : B) | Layer configuration | Decoloring rate A [%] | Judgment |
|---|---|---|---|---|---|
| Ex. 26 | 4-Acryloylmorpholine (Tokyo Chemical Industry Co., Ltd.) | 100:2 | FIG. 2 | 98 | A |
| Ex. 27 | 2-(Dimethylamino)ethyl methacrylate (Tokyo Chemical Industry Co., Ltd.) | 100:0.02 | FIG. 2 | 100 | A |

(continued)

| | Basic Compound: B | Mass ratio (Electrolyte precursor : B) | Layer configuration | Decoloring rate A [%] | Judgment |
|---|---|---|---|---|---|
| Ex. 28 | 3-[[2-(Methacryloyloxy)ethyl]dimethylammonio]propionate (Tokyo Chemical Industry Co., Ltd.) | 100:0.02 | FIG. 2 | 100 | A |
| Ex. 29 | 2-(Dimethylamino)ethyl acrylate (Tokyo Chemical Industry Co., Ltd.) | 100:0.01 | FIG. 2 | 100 | A |
| Ex. 30 | 2-(Dimethylamino)ethyl acrylate (Tokyo Chemical Industry Co., Ltd.) | 100:0.03 | FIG. 2 | 99 | A |
| Ex. 31 | 4-tert-Butylpyridine (Tokyo Chemical Industry Co., Ltd.) | 100:0.05 | FIG. 1 | 100 | A |
| Ex. 32 | 4-tert-Butylpyridine (Tokyo Chemical Industry Co., Ltd.) | 100:0.05 | FIG. 2 | 100 | A |
| Ex. 33 | 5-Ethyl-2-pyridineethanol (Tokyo Chemical Industry Co., Ltd.) | 100:0.05 | FIG. 1 | 99 | A |
| Ex. 34 | 5-Ethyl-2-pyridineethanol (Tokyo Chemical Industry Co., Ltd.) | 100:0.05 | FIG. 2 | 99 | A |
| Ex. 35 | 4-(3 -Phenylpropyl)pyridine (Tokyo Chemical Industry Co., Ltd.) | 100:0.05 | FIG. 1 | 99 | A |
| Ex. 36 | 4-(3-Phenylpropyl)pyridine (Tokyo Chemical Industry Co., Ltd.) | 100:0.05 | FIG. 2 | 99 | A |
| Ex. 37 | 5-Ethyl-2-pyridineethanol (Tokyo Chemical Industry Co., Ltd.) | 100:0.03 | FIG. 2 | 100 | A |
| Ex. 38 | 5-Ethyl-2-pyridineethanol (Tokyo Chemical Industry Co., Ltd.) | 100:0.07 | FIG. 2 | 100 | A |
| Ex. 39 | 5-Ethyl-2-pyridineethanol (Tokyo Chemical Industry Co., Ltd.) | 100:0.1 | FIG. 2 | 100 | A |
| Ex. 40 | 4-(3-Phenylpropyl)pyridine (Tokyo Chemical Industry Co., Ltd.) | 100:0.03 | FIG. 2 | 100 | A |
| Ex. 41 | 4-(3-Phenylpropyl)pyridine (Tokyo Chemical Industry Co., Ltd.) | 100:0.07 | FIG. 2 | 100 | A |
| Ex. 42 | 4-(3 -Phenylpropyl)pyridine (Tokyo Chemical Industry Co., Ltd.) | 100:0.1 | FIG. 2 | 100 | A |
| Ex. 43 | Triphenylphosphine (Tokyo Chemical Industry Co., Ltd.) | 100:0.05 | FIG. 2 | 99 | A |
| Ex. 44 | 1-Methyl-2-pyrrolidone (Tokyo Chemical Industry Co., Ltd.) | 100:2 | FIG. 2 | 99 | A |
| Ex. 45 | Ethyl 4-pyridylacetate (Tokyo Chemical Industry Co., Ltd.) | 100:0.05 | FIG. 2 | 99 | A |
| Ex. 46 | 4-Benzylpyridine (Tokyo Chemical Industry Co., Ltd.) | 100:0.05 | FIG. 2 | 99 | A |
| Ex. 47 | Diethylamine (Tokyo Chemical Industry Co., Ltd.) | 100:0.02 | FIG. 2 | 97 | A |
| Ex. 48 | Imidazole (Tokyo Chemical Industry Co., Ltd.) | 100:0.05 | FIG. 2 | 99 | A |

(continued)

| | Basic Compound: B | Mass ratio (Electrolyte precursor : B) | Layer configuration | Decoloring rate A [%] | Judgment |
|---|---|---|---|---|---|
| Comp. Ex. 1 | None | - | FIG. 1 | 90 | B |
| Comp. Ex. 2 | None | - | FIG. 2 | 85 | B |
| Comp. Ex. 3 | Ethyl phosphate (acid compound) (Tokyo Chemical Industry Co., Ltd.) | 100:0.05 | FIG. 2 | 81 | B |

[Table 3]

| | Basic Compound: B | Mass ratio (Electrolyte precursor : B) | Layer configuration | Decoloring rate A [%] | Judgment |
|---|---|---|---|---|---|
| Ex. 49 | Poly(4-vinylpyridine) (Mw=60,000) (Sigma-Aldritch) | 100:0.05 | FIG. 1 | 95 | A |
| Ex. 50 | Poly(4-vinylpyridine) (Mw=60.000) (Sigma-Aldritch) | 100:0.05 | FIG. 2 | 95 | A |
| Ex. 51 | Poly(4-vinylpyridine) (Mw=60,000) (Sigma-Aldritch) | 100:0.05 | FIG. 1 | 99 | A |
| Ex. 52 | Poly(dimethylaminoethyl methacrylate) (Mn=50,000) (Tokyo Chemical Industry Co., Ltd.) | 100:0.02 | FIG. 1 | 98 | A |
| Ex. 53 | 4-tert-Butylpyridine (Tokyo Chemical Industry Co., Ltd.) | 100:0.05 | FIG. 1 | 99 | A |
| Ex. 54 | Diethyamine (Tokyo Chemical Industry Co., Ltd.) | 100:0.02 | FIG. 1 | 98 | A |
| Ex. 55 | Poly(4-vinylpyridine) (Mw=60,000) (Sigma-Aldritch) | 100:0.05 | FIG. 2 | 99 | A |
| Ex. 56 | Poly(4-vinylpyridine) (Mw=160,000) (Sigma-Aldritch) | 100:0.05 | FIG. 2 | 100 | A |
| Ex. 57 | Polyacrylamide (Mn=40,000) (Sigma-Aldritch) | 100:2 | FIG. 2 | 97 | A |
| Ex. 58 | Poly(dimethylaminoethyl methacrylate) (Mn=50,000) (Tokyo Chemical Industry Co., Ltd.) | 100:0.02 | FIG. 2 | 99 | A |
| Ex. 59 | Poly(4-vinylpyridine) (Mw=60,000) (Sigma-Aldritch) | 100:0.01 | FIG. 2 | 97 | A |
| Ex. 60 | Poly(4-vinylpyridine) (Mw=60,000) (Sigma-Aldritch) | 100:0.03 | FIG. 2 | 99 | A |
| Ex. 61 | Poly(4-vinylpyridine) (Mw=60.000) (Sigma-Aldritch) | 100:0.07 | FIG. 2 | 100 | A |
| Ex. 62 | Poly(4-vinylpyridine) (Mw=60,000) (Sigma-Aldritch) | 100:0.1 | FIG. 2 | 99 | A |
| Ex. 63 | 5-Ethyl-2-pyridineethanol (Tokyo Chemical Industry Co., Ltd.) | 100:0.05 | FIG. 2 | 100 | A |
| Ex. 64 | 5-Ethyl-2-pyridineethanol (Tokyo Chemical Industry Co., Ltd.) | 100:0.03 | FIG. 2 | 100 | A |

(continued)

| | Basic Compound: B | Mass ratio (Electrolyte precursor : B) | Layer configuration | Decoloring rate A [%] | Judgment |
|---|---|---|---|---|---|
| Ex. 65 | 5-Ethyl-2-pyridineethanol (Tokyo Chemical Industry Co., Ltd.) | 100:0.07 | FIG. 2 | 100 | A |
| Ex. 66 | 5-Ethyl-2-pyridineethanol (Tokyo Chemical Industry Co., Ltd.) | 100:0.1 | FIG. 2 | 99 | A |
| Ex. 67 | Ethyl 4-pyridylacetate (Tokyo Chemical Industry Co., Ltd.) | 100:0.05 | FIG. 2 | 100 | A |
| Ex. 68 | 1-Methyl-2-pyrrolidone (Tokyo Chemical Industry Co., Ltd.) | 100:2 | FIG. 2 | 97 | A |
| Ex. 69 | Triphenylphosphine (Tokyo Chemical Industry Co., Ltd.) | 100:0.05 | FIG. 2 | 98 | A |
| Ex. 70 | Diethylamine (Tokyo Chemical Industry Co., Ltd.) | 100:0.02 | FIG. 2 | 98 | A |
| Ex. 71 | Imidazole (Tokyo Chemical Industry Co., Ltd.) | 100:0.05 | FIG. 2 | 98 | A |
| Comp. Ex. 1 | None | - | FIG. 1 | 89 | B |
| Comp. Ex. 2 | None | - | FIG. 2 | 82 | B |

It is found from the results of Table 1 to Table 3 that Examples 1 to 71 can provide electrochromic elements having long lifetimes by containing the basic compound in the electrolyte layer to prevent occurrence of the incomplete decoloring phenomenon.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention as recited in the appended claims.

This patent application is based on and claims priority to Japanese Patent Application No. 2021-060656, filed on March 31, 2021, in the Japan Patent Office.

[Reference Sings List]

1 first electrode
2 electrochromic layer (first electrochromic layer)
3 electrolyte layer
4 electrochemically active layer
5 second electrode
6 counter electrochromic layer (second electrochromic layer)

## Claims

**1.** An electrochromic element, comprising:

a first electrode (1);
an electrochromic layer (2) on the first electrode;
a second electrode (5);
an electrochemically active layer (4) on the second electrode; and

an electrolyte layer (3) between the electrochromic layer and the second electrode,
wherein
the electrochromic layer includes a triarylamine compound,
the electrochemically active layer includes an inorganic oxide,
the electrolyte layer includes a basic compound, the basic compound being:

1) a basic polymer having a weight average molecular weight of from 10,000 through 200,000;
2) at least one member selected from the group consisting of amines containing nitrogen atom, basic organic phosphorus compounds, and conjugated salts of organic acids; or
3) at least one member selected from the group consisting of pyrrolidine, pyrrole, 1-methyl-2-pyrrolidone, N-methylacetamide, N-methylformamide, pyridine, imidazole, pyrimidine, pyrazine, indole, 1,10-phenanthroline, 4-dimethylaminopyridine, 2,6-lutidine, bipyridine, fluoropyridine, 4-tert-butylpyridine, 2,6-di-tert-butylpyridine, 5-ethyl-2-pyridineethanol, ethyl 4-pyridylacetate, ethyl 3-pyridylacetate, ethyl 2-pyridylacetate, 4-benzylpyridine, 3-benzylpyridine, 2-benzylpyridine, 4-(3-phenylpropyl)pyridine, and ethyl 4-pyridylacetate,
and the amount of the basic compound is 0.01% by mass or more but 2% by mass or less relative to the total amount of the electrolyte layer.

**2.** The electrochromic element according to claim 1, wherein the basic compound is a compound having a pyridine group.

**3.** The electrochromic element according to claim 1 or 2, wherein the basic compound is polyvinylpyridine.

**4.** The electrochromic element according to any one of claims 1 to 3, wherein the inorganic oxide is tin oxide.

**5.** The electrochromic element according to any one of claims 1 to 4, wherein the electrochemically active layer includes an electrochromic material.

**6.** The electrochromic element according to claim 5, wherein the electrochromic material is a compound having at least one of a phosphonic acid group and a phosphoric acid group.

**7.** The electrochromic element according to claim 5 or 6, wherein the electrochromic material is a viologen derivative.

**8.** Use of the electrochromic element according to any one of claims 1 to 7 for an electrochromic display device or an electrochromic light-controlling device, wherein the electrochromic element exhibits a decoloring rate of 95% or higher, and the decoloring rate is calculated from Mathematical Formula 1 below:

-Mathematical Formula 1-

$$\text{Decoloring rate (\%)} = (T2/T1)\times 100$$

where when a voltage of 1.2 V is applied for 1 hour to between the electrodes facing each other in the electrochromic element for coloring driving and then the electrodes are short circuited for 30 minutes for decoloring driving, T1 is a luminous transmittance before the coloring driving and T2 is a luminous transmittance after the decoloring driving.

**9.** An electrochromic display device, comprising:
the electrochromic element according to any one of claims 1 to 7.

**10.** An electrochromic light-controlling device, comprising:
the electrochromic element according to any one of claims 1 to 7.

**Patentansprüche**

**1.** Elektrochromes Element, umfassend:

eine erste Elektrode (1);
eine elektrochrome Schicht (2) auf der ersten Elektrode;

eine zweite Elektrode (5);
eine elektrochemisch aktive Schicht (4) auf der zweiten Elektrode; und
eine Elektrolytschicht (3) zwischen der elektrochromen Schicht und der zweiten Elektrode,
wobei
die elektrochrome Schicht eine Triarylaminverbindung enthält,
die elektrochemisch aktive Schicht ein anorganisches Oxid enthält,
die Elektrolytschicht eine basische Verbindung enthält, wobei die basische Verbindung ist:

1) ein basisches Polymer mit einem gewichtsmittleren Molekulargewicht von 10.000 bis 200.000;
2) mindestens ein Mitglied, ausgewählt aus der Gruppe bestehend aus stickstoffhaltigen Aminen, basischen organischen Phosphorverbindungen und konjugierten Salzen organischer Säuren; oder
3) mindestens ein Mitglied aus der Gruppe bestehend aus Pyrrolidin, Pyrrol, 1-Methyl-2-pyrrolidon, N-Methylacetamid, N-Methylformamid, Pyridin, Imidazol, Pyrimidin, Pyrazin, Indol, 1,10-Phenanthrolin, 4-Dimethylaminopyridin, 2,6-Lutidin, Bipyridin, Fluorpyridin, 4-tert-Butylpyridin, 2,6-Di-tert-butylpyridin, 5-Ethyl-2-pyridinethanol, Ethyl-4-pyridylacetat, Ethyl-3-pyridylacetat, Ethyl-2-pyridylacetat, 4-Benzylpyridin, 3-Benzylpyridin, 2-Benzylpyridin, 4-(3-Phenylpropyl)pyridin und Ethyl-4-pyridylacetat, und

die Menge der basischen Verbindung 0,01 Massenprozent oder mehr, jedoch 2 Massenprozent oder weniger, bezogen auf die Gesamtmenge der Elektrolytschicht ist.

**2.** Elektrochromes Element nach Anspruch 1, wobei die basische Verbindung eine Verbindung mit einer Pyridingruppe ist.

**3.** Elektrochromes Element nach Anspruch 1 oder 2, wobei die basische Verbindung Polyvinylpyridin ist.

**4.** Elektrochromes Element gemäß einem der Ansprüche 1 bis 3, wobei das anorganische Oxid Zinnoxid ist.

**5.** Elektrochromes Element nach einem der Ansprüche 1 bis 4, wobei die elektrochemisch aktive Schicht ein elektrochromes Material enthält.

**6.** Elektrochromes Element nach Anspruch 5, wobei das elektrochrome Material eine Verbindung mit mindestens einer Phosphonsäuregruppe und/oder einer Phosphorsäuregruppe ist.

**7.** Elektrochromes Element nach Anspruch 5 oder 6, wobei das elektrochrome Material ein Viologenderivat ist.

**8.** Verwendung des elektrochromen Elements nach einem der Ansprüche 1 bis 7 für eine elektrochrome Anzeigevorrichtung oder eine elektrochrome Lichtsteuerungsvorrichtung, wobei das elektrochrome Element eine Entfärbungsrate von 95 % oder mehr aufweist und die Entfärbungsrate anhand der folgenden mathematischen Formel 1 berechnet wird:

-Mathematische Formel 1-

$$\text{Entfärbungsrate (\%)} = (T2/T1)\times 100$$

wobei, wenn eine Spannung von 1,2 V für 1 Stunde zwischen den einander gegenüberliegenden Elektroden im elektrochromen Element zum Einfärben angelegt wird und die Elektroden dann für 30 Minuten zum Entfärben kurzgeschlossen werden, T1 die Lichtdurchlässigkeit vor dem Einfärben und T2 die Lichtdurchlässigkeit nach dem Entfärben ist.

**9.** Elektrochrome Anzeigevorrichtung, umfassend:
das elektrochrome Element gemäß einem der Ansprüche 1 bis 7.

**10.** Elektrochrome Lichtsteuerungsvorrichtung, umfassend:
das elektrochrome Element gemäß einem der Ansprüche 1 bis 7.

## Revendications

1. Élément électrochrome, comprenant :

   une première électrode (1),
   une couche électrochrome (2) sur la première électrode,
   une deuxième électrode (5),
   une couche à activité électrochimique (4) sur la deuxième électrode, et
   une couche d'électrolyte (3) entre la couche électrochrome et la deuxième électrode ;
   étant entendu que
   la couche électrochrome comprend un composé triarylamine,
   la couche à activité électrochimique comprend un oxyde inorganique,
   la couche d'électrolyte comprend un composé basique, le composé basique étant :

   1) un polymère basique présentant un poids moléculaire moyen de 10 000 à 200 000,
   2) au moins un élément choisi dans le groupe constitué par les amines contenant un atome d'azote, les composés basiques de phosphore organique et les sels conjugués d'acides organiques, ou
   3) au moins un élément choisi dans le groupe constitué par : pyrrolidine, pyrrole, 1-méthyl-2-pyrrolidone, N-méthylacétamide, N-méthylformamide, pyridine, imidazole, pyrimidine, pyrazine, indole, 1,10-phénanthroline, 4-diméthylaminopyridine, 2,6-lutidine, bipyridine, fluoropyridine, 4-tert-butylpyridine, 2,6-di-tert-butylpyridine, 5-éthyl-2-pyridineéthanol, 4-pyridylacétate d'éthyle, 3-pyridylacétate d'éthyle, 2-pyridylacétate d'éthyle, 4-benzylpyridine, 3-benzylpyridine, 2-benzylpyridine, 4-(3-phénylpropyl)pyridine et 4-pyridylacétate d'éthyle, et la quantité du composé basique est supérieure ou égale à 0,01 % en masse mais inférieure ou égale à 2 % en masse par rapport à la quantité totale de la couche d'électrolyte.

2. Élément électrochrome selon la revendication 1, dans lequel le composé basique est un composé présentant un groupe pyridine.

3. Élément électrochrome selon la revendication 1 ou 2, dans lequel le composé basique est la polyvinylpyridine.

4. Élément électrochrome selon l'une quelconque des revendications 1 à 3, dans lequel l'oxyde inorganique est l'oxyde d'étain.

5. Élément électrochrome selon l'une quelconque des revendications 1 à 4, dans lequel la couche à activité électrochimique comprend un matériau électrochrome.

6. Élément électrochrome selon la revendication 5, dans lequel le matériau électrochrome est un composé présentant au moins un groupe acide phosphonique et un groupe acide phosphorique.

7. Élément électrochrome selon la revendication 5 ou 6, dans lequel le matériau électrochrome est un dérivé de viologène.

8. Utilisation de l'élément électrochrome selon l'une quelconque des revendications 1 à 7 pour un dispositif d' affichage électrochrome ou un dispositif de commande de lumière électrochrome, l'élément électrochrome possédant un taux de décoloration supérieur ou égal à 95 %, le taux de décoloration étant calculé à l'aide de la formule mathématique 1 ci-dessous :

   -Formule mathématique 1-

   $$\text{Taux de décoloration (\%)} = (T2 / T1) \times 100$$

   où, lorsqu'une tension de 1,2 V est appliquée pendant 1 heure entre les électrodes se faisant face dans l'élément électrochrome pour déclencher la coloration, puis que les électrodes sont court-circuitées pendant 30 minutes pour déclencher la décoloration, T1 est la transmittance de lumière avant la coloration et T2 est la transmittance de lumière après la décoloration.

9. Dispositif d'affichage électrochrome, comprenant :

l'élément électrochrome selon l'une quelconque des revendications 1 à 7.

**10.** Dispositif de commande de lumière électrochrome, comprenant : l'élément électrochrome selon l'une quelconque des revendications 1 à 7.

FIG. 1

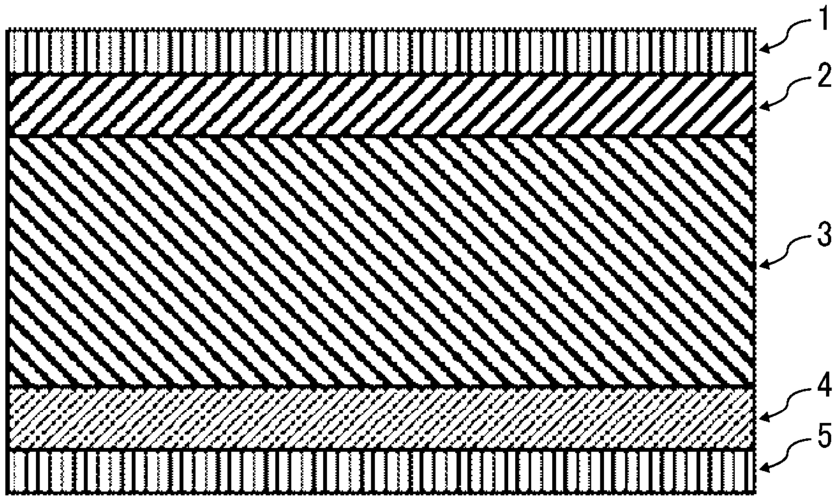


FIG. 2

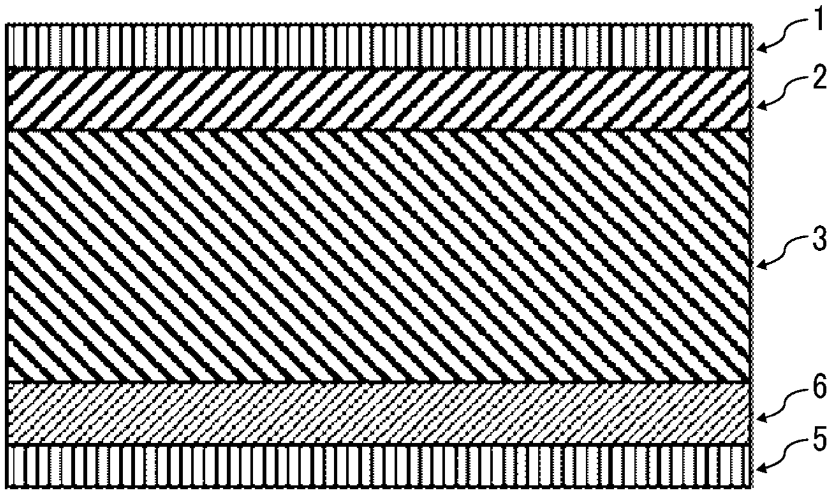

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6597373 B
- US 6188505 B
- US 20210032531 A1
- EP 2386901 A1
- JP 2021060656 A